# EUROPEAN PATENT APPLICATION

(11) **EP 4 435 045 A1**
(43) Date of publication of application: **25.09.2024**
(21) Application number: 23163318.1
(22) Date of filing: 21.03.2023
(51) Int. Cl.: C08K 5/00, C08K 5/357, C08K 9/10, C08L 1/28, C08L 29/04, G01N 21/94

(54) **LABELLED PARTICLES**

(71) Applicant: COSA Group GmbH, 80333 München (DE)
(72) Inventor: POTRECK, Janine, 80539 München (DE); MÜLLER, Axel Reimer, 83624 Otterfing (DE)
(74) Representative: Maiwald GmbH

(57) **Abstract**

The present invention relates to a labelled particle, i.e. a particle comprising a component and a tracer compound, a composition comprising said labelled particle, a method of manufacturing said labelled particle, a method of manufacturing said composition, and a method of determining the presence of said labelled particles on a substrate surface or in a volume of a fluid selected from the group consisting of a gas, a liquid, and a supercritical fluid.

## Description

### Technical Field

The present invention relates to a labelled particle, a composition comprising said labelled particle, a method of manufacturing said labelled particle, a method of manufacturing said composition, and a method of determining the presence of said labelled particles on a substrate surface or in a volume of a fluid selected from the group consisting of a gas, a liquid, and a supercritical fluid.

### Background of the Invention

The term "dust" typically refers to fine particles of solid matter such as (inorganic) mineral particles from outdoor soil (lifted by wind or volcanic eruptions), ash particles from combustion of fossil fuels and/or organic matter such as wood and other plant material, and organic particles such as plant pollen, human hair and dead skin cells, animal fur, textile fibers, paper fibers. Likewise, human activities result in the formation of a wide variety of dust. For instance, incomplete combustion of fuels results in the formation of ash particles and soot particles, which are present in exhaust gas produced in vehicle engines, in heating devices used in private homes and in industrial plants, use of any kind of vehicles typically results in the formation of particles from tire and brake wear. In particular, in densely populated areas such as urban regions dust resulting from human activities has been identified as affecting quality of life and also as representing a hazard to human health. Airborne dust is generally transported by moving air such as naturally occurring wind or ventilation induced in order to replace air in buildings in the process of heating, cooling and any kind of air conditioning. Even in outer space, so-called cosmic dust is widely present as dust clouds are the primary precursors for stars and stellar systems. Dust is almost ubiquitous.

In addition, airborne dust has the tendency to settle on surfaces. In everyday life, dust settled on surfaces is perceived as unpleasant as it affects the clean and tidy (or, in more proverbial terms, "immaculate") appearance of articles. For this reason, constant efforts are taken to remove dust from dwelling spaces such as private homes or office facilities, for instance by wiping surfaces on which dust has settled and/or by filtering air bearing dust (such as in air conditioning devices and in vacuum cleaners).

As dust represents a contaminant, its presence is particularly undesirable when controlled conditions and high cleanliness is required. For instance, highly controlled conditions are required in the manufacturing of medical devices, pharmaceutical agents, semiconductor materials and devices comprising semiconductor materials, optical materials and devices comprising optical materials, in the collection of samples to be analyzed for trace amounts of constituents and in the process of the analysis of such samples, as well as in the interior of clean rooms and surgery rooms .

In order to test and evaluate the efforts required in order to ensure and guarantee such highly controlled conditions, it is necessary to determine the efficiency of means for removing dust and/or other contaminants. For instance, the efficiency of air and gas filters has to be tested in order to prevent contamination resulting from surrounding atmosphere. Similarly, the efficiency of means for removing contaminants from surfaces has to be tested in order to ensure that a specific method intended to remove contaminants from a surface is in fact suitable for removing any contaminants in a reliable and reproducible manner.

Test dust, i.e. fine particles having reproducible properties, are commonly used as specimen in order to determine the efficiency of means for removing dust from gases and surfaces. Various types of test dust have been developed. Types of test dust commonly used nowadays include Arizona Test Dust A2, DMT Test Dust Type 8, dolomite, ASHRAE Test Dust according to Standard 52.2, Test Dust according to ARAMCO Standard, for instance.

However, these test dust have the disadvantage that they are difficult to handle without affecting their properties, because their particles typically have an irregular structure and irregular size distribution. The particles tend to aggregate easily into "clumps" which affects reliability and reproducibility of test results. Synthetic particles having a spherical shape have been developed in order to circumvent these problems. Yet, after such particles have settled on a surface it is difficult to detect these particles. Thus, it can be very challenging to detect a small number of particles after a cleaning means has been applied in order to test and evaluate efficiency of this cleaning means.

In view of this, the need persists to provide particles suitable as a test dust, which can be produced, stored, handled in a convenient, reliable and reproducible manner. Furthermore, the particles should be detected in a convenient, reliable and reproducible manner.

Therefore, it is an object of the present invention to provide a particle complying with these requirements.

### Brief Description of the Invention

Surprisingly, it was found that the drawbacks inherent in the prior art can be overcome and the aforementioned object can be achieved by providing a labelled particle comprising a polymer and a tracer compound.

Thus, the invention described in the following was completed.

In a first aspect, the present invention is directed to the provision of a labelled particle comprising a polymer and a tracer compound.

In a second aspect, the present invention is directed to the provision of a composition comprising a plurality of said labelled particle according to the first aspect of the invention.

In a third aspect, the present invention is directed to the provision of a method of preparing said labelled particle according to the first aspect of the invention.

In a fourth aspect, the present invention is directed to the provision of a method of preparing said composition according to the second aspect of the invention.

In a fifth aspect, the present invention is directed to the provision of a method of determining the presence of labelled particles according to the first aspect of the invention on a substrate surface.

The invention is described in detail in the following.

### Detailed Description of the Invention

In particular, the present invention encompasses the following embodiments according to the first aspect of the invention.
[1.1] Labelled particle comprising
   (a) a component selected from the group consisting of carbohydrates, cellulosics, proteins, fatty acids, trigylcerides of fatty acids and polymers, and
   (b) a tracer compound.
[1.2] Labelled particle as defined under item [1.1], wherein the fatty acids are selected from the group consisting of fatty acids having 12 to 26 carbon atoms.
[1.3] Labelled particle as defined under item [1.1], wherein the component is selected from the group consisting of polymers.
[1.4] Labelled particle as defined under item [1.1] to [1.3], wherein the tracer compound is activated or activatable.
[1.5] Labelled particle as defined under any one of item [1.1] to [1.4], wherein the tracer compound is a photoluminescent, chemiluminescent, bioluminescent or photobleaching compound.
[1.6] Labelled particle as defined under item [1.5], wherein the tracer compound is a fluorescent or phosphorescent compound.
[1.7] Labelled particle as defined under item [1.5], wherein the tracer compound is a fluorescent compound emitting light in the ultraviolet (290-379 nm), violet (380-450 nm), blue (451-500 nm), green (501-560 nm), yellow (561-580 nm), orange (581-600 nm) or red (601-780 nm) part of the spectrum.
[1.8] Labelled particle as defined under item [1.5], wherein the tracer compound is a fluorescent compound selected from the group consisting of fluorescein, rhodamine, oregon green, eosin, texas red, cascade blue, pacific blue, nile red, nile blue, cresyl violet, oxazine 170, proflavine, acridine orange, acridine yellow, auramine, crystal violet, malachite green, porphine, phthalocyanine, bilirubine and lucifer yellow.
[1.9] Labelled particle as defined under item [1.5], wherein the tracer compound is a phosphorescent compound emitting light in the ultraviolet (290-379 nm), violet (380-450 nm), blue (451-500 nm), green (501-560 nm), yellow (561-580 nm), orange (581-600 nm) or red (601-780 nm) part of the spectrum.
[1.10] Labelled particle as defined under item [1.1] to [1.4], wherein the tracer compound is a compound emitting α-radiation.
[1.11] Labelled particle as defined under item [1.1] to [1.4], wherein the tracer compound is a compound emitting β-radiation.
[1.12] Labelled particle as defined under any one of items [1.1] to [1.11], wherein the polymer comprises repeating units of a type selected from the group consisting of 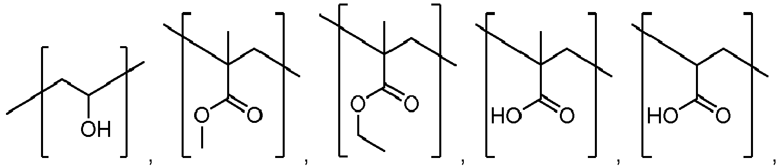 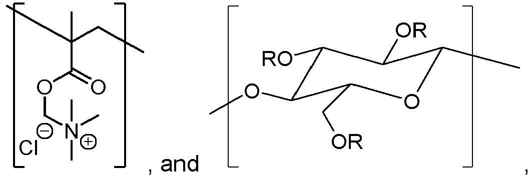 wherein each R is independently H or C₁-C₆ alkyl.
[1.13] Labelled particle as defined under any one of items [1.1] to [1.11], wherein the polymer comprises repeating units of a type selected from the group consisting of 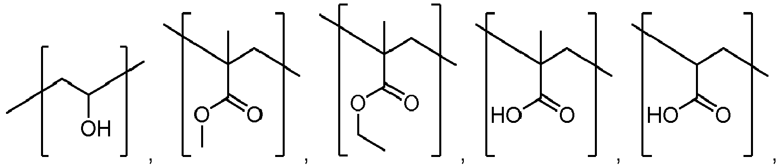 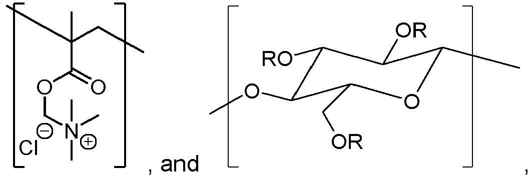 wherein each R is independently H, methyl or ethyl.
[1.14] Labelled particle as defined under any one of items [1.1] to [1.11], wherein the polymer comprises repeating units of a type selected from the group consisting of 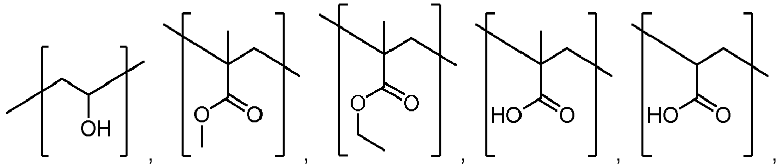 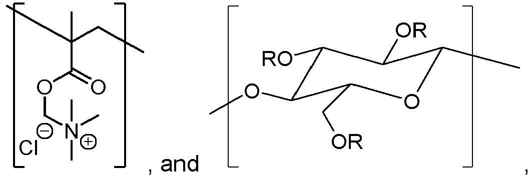 wherein each R is ethyl.
[1.15] Labelled particle as defined under any one of items [1.12] to [1.14], wherein the polymer comprises two or more types of repeating units selected from the group defined under any one of items [1.12] to [1.14].
[1.16] Labelled particle as defined under any one of items [1.12] to [1.14], wherein the polymer consists of two or more types of repeating units selected from the group defined under any one of items [1.12] to [1.14].
[1.17] Labelled particle as defined under any one of items [1.12] to [1.14], wherein the polymer consists of one type of repeating units selected from the group defined under any one of items [1.12] to [1.14].
[1.18] Labelled particle as defined under any one of items [1.1] to [1.11], wherein the polymer comprises repeating units represented by the formula, 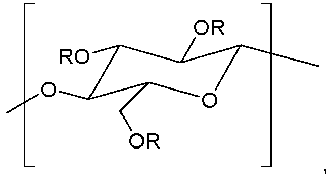 wherein each R is independently H or C₁-C₆ alkyl.
[1.19] Labelled particle as defined under any one of items [1.1] to [1.11], wherein the polymer comprises repeating units represented by the formula, 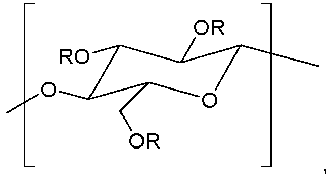 wherein each R is independently H, methyl or ethyl.
[1.20] Labelled particle as defined under any one of items [1.1] to [1.11], wherein the polymer comprises repeating units represented by the formula, 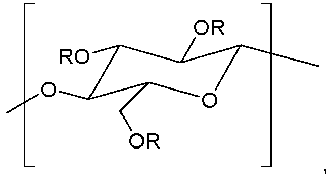 wherein each R is ethyl.
[1.21] Labelled particle as defined under any one of items [1.1] to [1.11], wherein the polymer consists of repeating units represented by the formula, 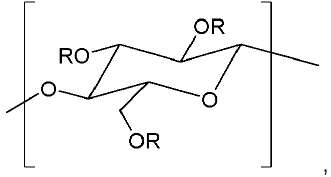 wherein each R is independently H or C₁-C₆ alkyl.
[1.22] Labelled particle as defined under any one of items [1.1] to [1.11], wherein the polymer consists of repeating units represented by the formula, 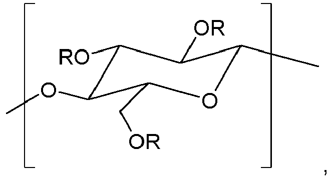 wherein each R is independently H, methyl or ethyl.
[1.23] Labelled particle as defined under any one of items [1.1] to [1.11], wherein the polymer consists of repeating units represented by the formula, 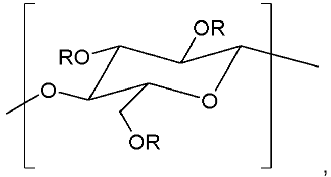 wherein each R is ethyl.
[1.24] Labelled particle as defined under any one of items [1.1] to [1.23], wherein the polymer is present as an exterior layer of the labelled particle.
[1.25] Labelled particle as defined under any one of items [1.1] to [1.24], wherein the labelled particle has a size of about 100 µm or less.
[1.26] Labelled particle as defined under any one of items [1.1] to [1.24], wherein the labelled particle has a size of about 80 µm or less.
[1.27] Labelled particle as defined under any one of items [1.1] to [1.24], wherein the labelled particle has a size of about 60 µm or less.
[1.28] Labelled particle as defined under any one of items [1.1] to [1.24], wherein the labelled particle has a size of about 50 µm or less.
[1.29] Labelled particle as defined under any one of items [1.1] to [1.24], wherein the labelled particle has a size of about 40 µm or less.
[1.30] Labelled particle as defined under any one of items [1.1] to [1.29], wherein the labelled particle has a size of about 1 nm or more.
[1.31] Labelled particle as defined under any one of items [1.1] to [1.29], wherein the labelled particle has a size of about 10 nm or more.
[1.32] Labelled particle as defined under any one of items [1.1] to [1.29], wherein the labelled particle has a size of about 50 nm or more.
[1.33] Labelled particle as defined under any one of items [1.1] to [1.29], wherein the labelled particle has a size of about 100 nm or more.
[1.34] Labelled particle as defined under any one of items [1.1] to [1.29], wherein the labelled particle has a size of about 500 nm or more.
[1.35] Labelled particle as defined under any one of items [1.1] to [1.29], wherein the labelled particle has a size of about 1 µm or more.
[1.36] Labelled particle as defined under any one of items [1.1] to [1.24], wherein the labelled particle has a size in the range of about 1 nm to 100 µm.
[1.37] Labelled particle as defined under any one of items [1.1] to [1.24], wherein the labelled particle has a size in the range of about 10 nm to 80 µm.
[1.38] Labelled particle as defined under any one of items [1.1] to [1.24], wherein the labelled particle has a size in the range of about 50 nm to 60 µm.
[1.39] Labelled particle as defined under any one of items [1.1] to [1.24], wherein the labelled particle has a size in the range of about 100 nm to 50 µm.
[1.40] Labelled particle as defined under any one of items [1.1] to [1.24], wherein the labelled particle has a size in the range of about 500 nm to 40 µm.
[1.41] Labelled particle as defined under any one of items [1.1] to [1.24], wherein the labelled particle has a size in the range of about 1 µm to 40 µm.

Furthermore, the present invention encompasses the following embodiments according to the **second aspect** of the invention.
[2.1] Composition comprising a plurality of the labelled particle as defined under any one items [1.1] to [1.41].
[2.2] Composition as defined under item [2.1], wherein the composition contains the plurality of labelled particles in an amount of 30 wt.-% or more relative to the total weight of the composition.
[2.3] Composition as defined under item [2.1], wherein the composition contains the plurality of labelled particles in an amount of 40 wt.-% or more relative to the total weight of the composition.
[2.4] Composition as defined under item [2.1], wherein the composition contains the plurality of labelled particles in an amount of 50 wt.-% or more relative to the total weight of the composition.
[2.5] Composition as defined under item [2.1], wherein the composition contains the plurality of labelled particles in an amount of 60 wt.-% or more relative to the total weight of the composition.
[2.6] Composition as defined under item [2.1], wherein the composition contains the plurality of labelled particles in an amount of 70 wt.-% or more relative to the total weight of the composition.
[2.7] Composition as defined under item [2.1], wherein the composition contains the plurality of labelled particles in an amount of 80 wt.-% or more relative to the total weight of the composition.
[2.8] Composition as defined under item [2.1], wherein the composition contains the plurality of labelled particles in an amount of 90 wt.-% or more relative to the total weight of the composition.
[2.9] Composition as defined under item [2.1], wherein the composition contains the plurality of labelled particles in an amount of 95 wt.-% or more relative to the total weight of the composition.
[2.10] Composition as defined under item [2.1], wherein the composition contains the plurality of labelled particles in an amount of 96 wt.-% or more relative to the total weight of the composition.
[2.11] Composition as defined under item [2.1], wherein the composition contains the plurality of labelled particles in an amount of 97 wt.-% or more relative to the total weight of the composition.
[2.12] Composition as defined under item [2.1], wherein the composition contains the plurality of labelled particles in an amount of 98 wt.-% or more relative to the total weight of the composition.
[2.13] Composition as defined under any one of items [2.1] to [2.11], wherein the composition contains the plurality of labelled particles in an amount of 98 wt.-% or less relative to the total weight of the composition.
[2.14] Composition as defined under any one of items [2.1] to [2.10], wherein the composition contains the plurality of labelled particles in an amount of 97 wt.-% or less relative to the total weight of the composition.
[2.15] Composition as defined under any one of items [2.1] to [2.9], wherein the composition contains the plurality of labelled particles in an amount of 96 wt.-% or less relative to the total weight of the composition.
[2.16] Composition as defined under any one of items [2.1] to [2.8], wherein the composition contains the plurality of labelled particles in an amount of 95 wt.-% or less relative to the total weight of the composition.
[2.17] Composition as defined under any one of items [2.1] to [2.7], wherein the composition contains the plurality of labelled particles in an amount of 90 wt.-% or less relative to the total weight of the composition.
[2.18] Composition as defined under any one of items [2.1] to [2.6], wherein the composition contains the plurality of labelled particles in an amount of 80 wt.-% or less relative to the total weight of the composition.
[2.19] Composition as defined under any one of items [2.1] to [2.5], wherein the composition contains the plurality of labelled particles in an amount of 70 wt.-% or less relative to the total weight of the composition.
[2.20] Composition as defined under any one of items [2.1] to [2.4], wherein the composition contains the plurality of labelled particles in an amount of 60 wt.-% or less relative to the total weight of the composition.
[2.21] Composition as defined under any one of items [2.1] to [2.3][2.20], wherein the composition contains the plurality of labelled particles in an amount of 50 wt.-% or less relative to the total weight of the composition.
[2.22] Composition as defined under any one of items [2.1], wherein the composition furthermore comprises a flow regulating agent.
[2.23] Composition as defined under item [2.22], wherein the flow regulating agent is selected from particles different from photoluminescent compounds, chemiluminescent compounds, bioluminescent compounds, photobleaching compounds, fluorescent compounds, phosphorescent compounds, compounds emitting α-radiation, compounds emitting β-radiation.
[2.24] Composition as defined under item [2.22] or [2.23], wherein the flow regulating agent is selected from the group consisting of silica, silica gel, fumed silica, talc, and magnesium carbonate.
[2.25] Composition as defined under item [2.22] or [2.23], wherein the flow regulating agent is selected from the group consisting of silica, silica gel, and fumed silica.
[2.26] Composition as defined under any one of items [2.22] to [2.25], wherein the flow regulating agent has a particle size of 500 nm or less.
[2.27] Composition as defined under any one of items [2.22] to [2.25], wherein the flow regulating agent has a particle size of 300 nm or less.
[2.28] Composition as defined under any one of items [2.22] to [2.25], wherein the flow regulating agent has a particle size of 200 nm or less.
[2.29] Composition as defined under any one of items [2.22] to [2.25], wherein the flow regulating agent has a particle size of 100 nm or less.
[2.30] Composition as defined under any one of items [2.22] to [2.29], wherein the flow regulating agent is present in the composition in an amount of at least about 1 wt.-% relative to the total weight of the composition.
[2.31] Composition as defined under any one of items [2.22] to [2.29], wherein the flow regulating agent is present in the composition in an amount of at least about 2 wt.-% relative to the total weight of the composition.
[2.32] Composition as defined under any one of items [2.22] to [2.29], wherein the flow regulating agent is present in the composition in an amount of at least about 3 wt.-% relative to the total weight of the composition.
[2.33] Composition as defined under any one of items [2.22] to [2.29], wherein the flow regulating agent is present in the composition in an amount of at least about 4 wt.-% relative to the total weight of the composition.
[2.34] Composition as defined under any one of items [2.22] to [2.29], wherein the flow regulating agent is present in the composition in an amount of at least about 5 wt.-% relative to the total weight of the composition.
[2.35] Composition as defined under any one of items [2.22] to [2.34], wherein the flow regulating agent is present in the composition in an amount of about 20 wt.-% or less relative to the total weight of the composition.
[2.36] Composition as defined under any one of items [2.22] to [2.34], wherein the flow regulating agent is present in the composition in an amount of about 17 wt.-% or less relative to the total weight of the composition.
[2.37] Composition as defined under any one of items [2.22] to [2.34], wherein the flow regulating agent is present in the composition in an amount of about 15 wt.-% or less relative to the total weight of the composition.
[2.38] Composition as defined under any one of items [2.22] to [2.34], wherein the flow regulating agent is present in the composition in an amount of about 13 wt.-% or less relative to the total weight of the composition.
[2.39] Composition as defined under any one of items [2.22] to [2.34], wherein the flow regulating agent is present in the composition in an amount of about 12 wt.-% or less relative to the total weight of the composition.
[2.40] Composition as defined under any one of items [2.22] to [2.34], wherein the flow regulating agent is present in the composition in an amount of about 10 wt.-% or less relative to the total weight of the composition.
[2.41] Composition as defined under any one of items [2.22] to [2.40], wherein the flow regulating agent is present in the composition in an amount in the range of about 1 wt.-%. to 20 wt.-% relative to the total weight of the composition.
[2.42] Composition as defined under any one of items [2.22] to [2.40], wherein the flow regulating agent is present in the composition in an amount in the range of about 2 wt.-%. to 17 wt.-% relative to the total weight of the composition.
[2.43] Composition as defined under any one of items [2.22] to [2.40], wherein the flow regulating agent is present in the composition in an amount in the range of about 3 wt.-%. to 15 wt.-% relative to the total weight of the composition.
[2.44] Composition as defined under any one of items [2.22] to [2.40], wherein the flow regulating agent is present in the composition in an amount in the range of about 3 wt.-%. to 12 wt.-% relative to the total weight of the composition.
[2.45] Composition as defined under any one of items [2.22] to [2.40], wherein the flow regulating agent is present in the composition in an amount in the range of about 4 wt.-%. to 11 wt.-% relative to the total weight of the composition.
[2.46] Composition as defined under any one of items [2.22] to [2.40], wherein the flow regulating agent is present in the composition in an amount in the range of about 5 wt.-%. to 10 wt.-% relative to the total weight of the composition.
[2.47] Composition as defined under any one of items [2.22] to [2.40], wherein the composition comprises about 4 wt.-% or less of a solvent relative to the total weight of the composition.
[2.48] Composition as defined under any one of items [2.22] to [2.40], wherein the composition comprises about 2 wt.-% or less of a solvent relative to the total weight of the composition.
[2.49] Composition as defined under any one of items [2.1] to [2.48], wherein the composition furthermore contains an adhesive agent.
[2.50] Composition as defined under any one of items [2.1] to [2.49], wherein the plurality of labelled particles has a mean particle size D₅₀ of about 100 µm or less.
[2.51] Composition as defined under any one of items [2.1] to [2.49], wherein the plurality of labelled particles has a mean particle size D₅₀ of about 80 µm or less.
[2.52] Composition as defined under any one of items [2.1] to [2.49], wherein the plurality of labelled particles has a mean particle size D₅₀ of about 60 µm or less.
[2.53] Composition as defined under any one of items [2.1] to [2.49], wherein the plurality of labelled particles has a mean particle size D₅₀ of about 50 µm or less.
[2.54] Composition as defined under any one of items [2.1] to [2.49], wherein the plurality of labelled particles has a mean particle size D₅₀ of about 40 µm or less.
[2.55] Composition as defined under any one of items [2.1] to [2.49], wherein the plurality of labelled particles has a mean particle size D₅₀ of about 1 nm or more.
[2.56] Composition as defined under any one of items [2.1] to [2.54], wherein the plurality of labelled particles has a mean particle size D₅₀ of about 10 nm or more.
[2.57] Composition as defined under any one of items [2.1] to [2.54], wherein the plurality of labelled particles has a mean particle size D₅₀ of about 50 nm or more.
[2.58] Composition as defined under any one of items [2.1] to [2.54], wherein the plurality of labelled particles has a mean particle size D₅₀ of about 100 nm or more.
[2.59] Composition as defined under any one of items [2.1] to [2.54], wherein the plurality of labelled particles has a mean particle size D₅₀ of about 500 nm or more.
[2.60] Composition as defined under any one of items [2.1] to [2.54], wherein the plurality of labelled particles has a mean particle size D₅₀ of about 1 µm or more.
[2.61] Composition as defined under any one of items [2.1] to [2.49], wherein the plurality of labelled particles has a mean particle size D₅₀ of in the range of about 1 nm to 100 µm.
[2.62] Composition as defined under any one of items [2.1] to [2.49], wherein the plurality of labelled particles has a mean particle size D₅₀ of in the range of about 10 nm to 80 µm.
[2.63] Composition as defined under any one of items [2.1] to [2.49], wherein the plurality of labelled particles has a mean particle size D₅₀ of in the range of about 50 nm to 60 µm.
[2.64] Composition as defined under any one of items [2.1] to [2.49], wherein the plurality of labelled particles has a mean particle size D₅₀ of in the range of about 100 nm to 50 µm.
[2.65] Composition as defined under any one of items [2.1] to [2.49], wherein the plurality of labelled particles has a mean particle size D₅₀ of in the range of about 500 nm to 40 µm.
[2.66] Composition as defined under any one of items [2.1] to [2.49], wherein the plurality of labelled particles has a mean particle size D₅₀ of in the range of about 1 µm to 40 µm.
[2.67] Composition as defined under any one of items [2.1] to [2.66], wherein the plurality of labelled particles comprises
   - a first population of labelled particles as defined under any one of items [1.1] to [1.41], wherein the tracer compound comprised in the labelled particles of this first population is a first tracer compound;
      and
   - a second population of labelled particles as defined under any one of items [1.1] to [1.41], wherein the tracer compound comprised in the labelled particles of this second population is a second tracer compound,
   wherein the first tracer compound is different from the second tracer compound.
[2.68] Composition as defined under item [2.67], wherein
   - the first population of labelled particles has a first mean particle size D¹₅₀, and
   - the second population of labelled particles has a second mean particle size D²₅₀, wherein the ratio D²₅₀ / D¹₅₀ is in the range of 0.9 to 1.1.
[2.69] Composition as defined under item [2.67], wherein
   - the first population of labelled particles has a first mean particle size D¹₅₀, and
   - the second population of labelled particles has a second mean particle size D²₅₀, wherein the ratio D²₅₀ / D¹₅₀ is 1.2 or more.
[2.70] Composition as defined under item [2.69], wherein the ratio D²₅₀ / D¹₅₀ is 1.5 or more.
[2.71] Composition as defined under item [2.69], wherein the ratio D²₅₀ / D¹50 is 2 or more.
[2.72] Composition as defined under any one of items [2.67] to [2.71], wherein the plurality of labelled particles comprises at least one further population of labelled particles as defined under any one of items [1.1] to [1.41], wherein the tracer compound comprised in the labelled particles of this at least one further population is a further tracer compound,
   wherein the first tracer compound, the second tracer compound and each of the further tracer compounds are different from each other.
[2.73] Composition as defined under item [2.72], wherein
   - the first population of labelled particles has a first mean particle size D¹₅₀,
   - the second population of labelled particles has a second mean particle size D²₅₀, and
   - the at least one further population of labeled particles has a mean particle size Dⁿ50,
   wherein the ratio Dⁿ₅₀ / D⁽ⁿ⁻¹⁾₅₀ is in the range of 0.9 to 1.1, wherein D⁽ⁿ⁻¹⁾₅₀ is the mean particle size of the (n-1)^{th} population.
[2.74] Composition as defined under item [2.72], wherein
   - the first population of labelled particles has a first mean particle size D¹₅₀,
   - the second population of labelled particles has a second mean particle size D²₅₀, and
   - the at least one further population of labeled particles has a mean particle size Dⁿ₅₀,
   wherein the ratio Dⁿ₅₀ / D⁽ⁿ⁻¹⁾₅₀ is 1.2 or more, wherein D⁽ⁿ⁻¹⁾₅₀ is the mean particle size of the (n-1)^{th} population.
[2.75] Composition as defined under item [2.74], wherein the ratio Dⁿ₅₀ / D⁽ⁿ⁻¹⁾₅₀ is 1.5 or more.
[2.76] Composition as defined under item [2.74], wherein the ratio Dⁿ₅₀ / D⁽ⁿ⁻¹⁾₅₀ is 2 or more.
[2.77] Composition as defined under any one of items [2.1] to [2.66], wherein the ratio of the particle size D₉₀ and the particle size D₁₀ D₉₀ / D₁₀ is 10 or less.
[2.78] Composition as defined under any one of items [2.1] to [2.66], wherein the ratio of the particle size D₉₀ and the particle size D₁₀ D₉₀ / D₁₀ is 7 or less.
[2.79] Composition as defined under any one of items [2.1] to [2.66], wherein the ratio of the particle size D₉₀ and the particle size D₁₀ D₉₀ / D₁₀ is 5 or less.
[2.80] Composition as defined under any one of items [2.1] to [2.66], wherein the ratio of the particle size D₉₀ and the particle size D₁₀ D₉₀ / D₁₀ is 3 or less.
[2.81] Composition as defined under any one of items [2.1] to [2.66], wherein the ratio of the particle size D₉₀ and the particle size D₁₀ D₉₀ / D₁₀ is 2 or less.
[2.82] Composition as defined under any one of items [2.67] to [2.71], wherein in the first population of labelled particles and in the second population of labelled particles the ratio D₉₀ / D₁₀ is 10 or less.
[2.83] Composition as defined under any one of items [2.67] to [2.71], wherein in the first population of labelled particles and in the second population of labelled particles the ratio D₉₀ / D₁₀ is 7 or less.
[2.84] Composition as defined under any one of items [2.67] to [2.71], wherein in the first population of labelled particles and in the second population of labelled particles the ratio D₉₀ / D₁₀ is 5 or less.
[2.85] Composition as defined under any one of items [2.67] to [2.71], wherein in the first population of labelled particles and in the second population of labelled particles the ratio D₉₀ / D₁₀ is 3 or less.
[2.86] Composition as defined under any one of items [2.67] to [2.71], wherein in the first population of labelled particles and in the second population of labelled particles the ratio D₉₀ / D₁₀ is 2 or less.
[2.87] Composition as defined under any one of items [2.72] to [2.76], wherein in each of the populations of labelled particles the ratio D₉₀ / D₁₀ is 10 or less.
[2.88] Composition as defined under any one of items [2.72] to [2.76], wherein in each of the populations of labelled particles the ratio D₉₀ / D₁₀ is 7 or less.
[2.89] Composition as defined under any one of items [2.72] to [2.76], wherein in each of the populations of labelled particles the ratio D₉₀ / D₁₀ is 5 or less.
[2.90] Composition as defined under any one of items [2.72] to [2.76], wherein in each of the populations of labelled particles the ratio D₉₀ / D₁₀ is 3 or less.
[2.91] Composition as defined under any one of items [2.72] to [2.76], wherein in each of the populations of labelled particles the ratio D₉₀ / D₁₀ is 2 or less.
[2.92] Composition as defined under any one of items [2.1] to [2.91], wherein the ratio of the mean particle size D₅₀ measured after the composition was prepared and the mean particle size D₅₀ measured after a storage for 6 months at 20 °C and 40 % relative humidity is in the range of about 0.9 to 1.1.
[2.93] Composition as defined under any one of items [2.1] to [2.92], wherein the plurality of the labelled particles contain a tracer compound selected from the group consisting of photoluminescent compounds, chemiluminescent compounds, bioluminescent compounds or photobleaching compounds, fluorescent compounds and phosphorescent compounds, and wherein the ratio of the intensity of radiation Iₐ emitted from the plurality of labelled particles measured after the composition was prepared and the ratio of the intensity of radiation I_{b} emitted from the plurality of labelled particles measured after a storage for 6 months at 20 °C and 40 % relative humidity is in the range of about 0.9 to 1.1.
[2.94] Composition as defined under any one of items [2.1] to [2.91], wherein the ratio of the angle of repose δ₁ measured after the composition was prepared and the angle of repose δ₂ measured after a storage for 6 months at 20 °C and 40 % relative humidity is in the range of about 0.9 to 1.1.

The present invention encompasses the following embodiments according to the **third aspect** of the invention.
[3.1] Method of preparing a labelled particle, wherein the labelled particle is as defined under any one of items [1.1] to [1.41], comprising the following steps:
   (a) providing a solution of a component and a tracer compound in a non-polar solvent,
   (b) adding the solution obtained in step (a) to water under mixing action to form a dispersion,
   (c) removing the non-polar solvent,
   (d) separating the labelled particles thus formed,
   (e) drying the labelled particles obtained in step (d),
   wherein the component is selected from the group consisting of carbohydrates, cellulosics, proteins, fatty acids, trigylcerides of fatty acids and polymers.
[3.2] Method of preparing a labelled particle as defined under item [3.1], wherein the fatty acids are selected from fatty acids having 12 to 26 carbon atoms.
[3.3] Method of preparing a labelled particle as defined under item [3.1], wherein the component is selected from the group consisting of polymers.
[3.4] Method of preparing a labelled particle as defined under any one of items [3.1] to [3.3], wherein the non-polar solvent is selected from the group consisting of alkanes, cycloalkanes, halogenated alkanes, halogenated cycloalkanes, dialkylethers, alkanoic acid alkyl esters, and combinations of these.
[3.5] Method of preparing a labelled particle as defined under any one of items [3.1] to [3.3], wherein the non-polar solvent is selected from the group consisting of dichloromethane, trichloromethane, tetrachlormethane, diethylether, dipropylether, acetic acid methyl ester, acetic acid ethyl ester, and combinations of these.
[3.6] Method of preparing a labelled particle as defined under any one of items [3.1] to [3.3], wherein the non-polar solvent has boiling point of less than 50 °C.
[3.7] Method of preparing a labelled particle as defined under any one of items [3.1] to [3.6], wherein in step (b) the solution obtained in step (a) is added to water under shear.
[3.8] Method of preparing a labelled particle as defined under any one of items [3.1] to [3.7], wherein in step (b) the solution obtained in step (a) is added to water under shear using an apparatus comprising a rotor-stator combination.
[3.9] Method of preparing a labelled particle as defined under any one of items [3.1] to [3.8], wherein in step (b) the water contains a dispersing agent.
[3.10] Method of preparing a labelled particle as defined under item [3.9], wherein the dispersing agent is a polyvinylalcohol.
[3.11] Method of preparing a labelled particle as defined under any one of items [3.1] to [3.10], wherein in step (c) the non-polar solvent is removing by evaporating at atmospheric pressure, evaporating at reduced pressure, extraction or a combination of these.
[3.12] Method of preparing a labelled particle as defined under any one of items [3.1] to [3.11], wherein in step (d) the labelled particles are separated by means of centrifugation.
[3.13] Method of preparing a labelled particle as defined under any one of items [3.1] to [3.12], wherein in step (e) drying is effected by freeze-drying or spray-drying.
[3.14] Method of preparing a labelled particle as defined under any one of items [3.1] to [3.13], wherein a flow regulating agent is added before or after step (e).
[3.15] Method of preparing a labelled particle as defined under item [3.14], wherein the flow regulating agent is selected from the group consisting of particles different from photoluminescent compounds, chemiluminescent compounds, bioluminescent compounds, photobleaching compounds, fluorescent compounds, phosphorescent compounds, compounds emitting α-radiation, and compounds emitting β-radiation.
[3.16] Method of preparing a labelled particle as defined under item [3.14], wherein the flow regulating agent is selected from the group consisting of silica, silica gel, fumed silica, talc, and magnesium carbonate.
[3.17] Method of preparing a labelled particle as defined under item [3.15], wherein the flow regulating agent is as defined under any one of items [2.25] to [2.29].
[3.18] Method of preparing a labelled particle as defined under any one of items [3.1] to [3.17], wherein in step (e) drying is effected by freeze-drying and a flow regulating agent is added after step (e).

Furthermore, the present invention encompasses the following embodiments according to the **fourth aspect** of the invention.
[4.1] Method of preparing a composition comprising a plurality of the labelled particle, wherein the composition is as defined under any one of items [2.1] to [2.94], comprising the steps of:
   (a) providing a solution of a component and a tracer compound in a non-polar solvent,
   (b) adding the solution obtained in step (a) to water under mixing action to form a dispersion,
   (c) removing the non-polar solvent,
   (d) separating the labelled particles thus formed,
   (e) drying the labelled particles obtained in step (d),

   wherein any component comprised in the composition in addition to said plurality of the labelled particle is added before or after step (e).
   wherein the component is selected from the group consisting of carbohydrates, cellulosics, proteins, fatty acids, trigylcerides of fatty acids and polymers.
[4.2] Method of preparing a composition as defined under item [4.1], wherein the fatty acids are selected from fatty acids having 12 to 26 carbon atoms.
[4.3] Method of preparing a composition as defined under item [4.1], wherein the component is selected from the group consisting of polymers.
[4.4] Method of preparing a composition as defined under any one of items [4.1] to [4.3], wherein a flow regulating agent is added before or after step (e).
[4.5] Method of preparing a composition as defined under item [4.4], wherein the flow regulating agent is selected from the group consisting of particles different from photoluminescent compounds, chemiluminescent compounds, bioluminescent compounds, photobleaching compounds, fluorescent compounds, phosphorescent compounds, compounds emitting α-radiation, compounds emitting β-radiation.
[4.6] Method of preparing a composition as defined under item [4.4] or [4.5], wherein the flow regulating agent is selected from the group consisting of silica, silica gel, fumed silica, talc, and magnesium carbonate.
[4.7] Method of preparing a composition as defined under item [4.6], wherein the flow regulating agent is as defined under any one of items [2.25] to [2.29].
[4.8] Method of preparing a composition as defined under any one of items [4.1] to [4.7], wherein the non-polar solvent is selected from the group consisting of alkanes, cycloalkanes, halogenated alkanes, halogenated cycloalkanes, dialkylethers, alkanoic acid alkyl esters, and combinations of these.
[4.9] Method of preparing a composition as defined under any one of items [4.1] to [4.7], wherein the non-polar solvent is selected from the group consisting of dichloromethane, trichloromethane, tetrachlormethane, diethylether, dipropylether, acetic acid methyl ester, acetic acid ethyl ester, and combinations of these.
[4.10] Method of preparing a composition as defined under any one of items [4.1] to [4.8], wherein the non-polar solvent has boiling point of less than 50 °C.
[4.11] Method of preparing a composition as defined under any one of items [4.1] to [4.10], wherein in step (b) the solution obtained in step (a) is added to water under shear.
[4.12] Method of preparing a composition as defined under any one of items [4.1] to [4.11][4.1], wherein in step (b) the solution obtained in step (a) is added to water under shear using an apparatus comprising a rotor-stator combination.
[4.13] Method of preparing a composition as defined under any one of items [4.1] to [4.12][4.1], wherein in step (b) the water contains a dispersing agent.
[4.14] Method of preparing a composition as defined under item [4.13], wherein the dispersing agent is a polyvinylalcohol.
[4.15] Method of preparing a composition as defined under any one of items [4.1] to [4.14][4.1], wherein in step (c) the non-polar solvent is removing by evaporating at atmospheric pressure, evaporating at reduced pressure, extraction or a combination of these.
[4.16] Method of preparing a composition as defined under any one of items [4.1] to [4.15][4.1], wherein in step (d) the labelled particles are separated by means of centrifugation.
[4.17] Method of preparing a composition as defined under any one of items [4.1] to [4.16][4.1], wherein in step (e) drying is effected by freeze-drying or spray-drying.
[4.18] Method of preparing a composition as defined under any one of items [4.1] to [4.16][4.1], wherein in step (e) drying is effected by freeze-drying.

Furthermore, the present invention encompasses the following embodiments according to the **fifth aspect** of the invention.
[5.1] Method of determining the presence of labelled particles on a substrate surface, wherein each of the labelled particles is as defined under any one of items [1.1] to [1.41], comprising the steps of:
   (a) applying a plurality of labelled particles to a substrate surface, and
   (b) observing the substrate surface using a means for detecting a signal emitted by the labelled particles.
[5.2] Method of determining the presence of labelled particles on a substrate surface as defined under item [5.1], wherein in step (a) the plurality of labelled particles is a component of a composition as defined under any one of items [2.1] to [2.92].
[5.3] Method of determining the presence of labelled particles on a substrate surface as defined under item [5.1] or [5.2], wherein said substrate surface is selected from the group consisting of the surface the interior of a cleanroom, the surface the interior of a surgery room, the surface of a medical device, the surface of a semiconductor material, the surface of a device comprising a semiconductor material, the surface of an optical material, the surface of a device comprising an optical material, the surface of a manufacturing apparatus, the surface of a filter pad, the surface of a packaging material, the surface of a pharmaceutical formulation, and the surface of package containing a pharmaceutical formulation.
[5.4] Method of determining the presence of labelled particles on a substrate surface as defined under any one of items [5.1] to [5.3], wherein
   - the labelled particles comprise as the tracer compound a fluorescent compound as defined under any one of items [1.6] to [1.8],
   - the method comprises in said step (b) irradiating the substrate surface with radiation inducing the fluorescent compound to emit fluorescent radiation, and
   - the means for detecting a signal emitted by the labelled particles is a device detecting for said fluorescent radiation.
[5.5] Method of determining the presence of labelled particles on a substrate surface as defined under any one of items [5.1] to [5.3], wherein
   - the labelled particles comprise as the tracer compound a phosphorescent compound as defined under any one of items [1.6] and [1.9],
   - the method comprises in said step (b) or before said step (b) irradiating the substrate surface with radiation inducing the phosphorescent compound to emit phosphorescent radiation, and
   - the means for detecting a signal emitted by the labelled particles is a device for detecting said phosphorescent radiation.
[5.6] Method of determining the presence of labelled particles on a substrate surface as defined under any one of items [5.1] to [5.3], wherein
   - the labelled particles comprise as the tracer compound a compound emitting α-radiation as defined under item [1.10] and
   - the means for detecting a signal emitted by the labelled particles is a device for detecting α-radiation.
[5.7] Method of determining the presence of labelled particles on a substrate surface as defined under any one of items [5.1] to [5.3], wherein
   - the labelled particles comprise as the tracer compound a compound emitting β-radiation as defined under item [1.11] and
   - the means for detecting a signal emitted by the labelled particles is a device for detecting β-radiation.
[5.8] Method of determining the presence of labelled particles on a substrate surface as defined under any one of items [5.1] to [5.7], wherein the means for detecting a signal emitted by the labelled particles comprises an imaging device.
[5.9] Method of determining the presence of labelled particles on a substrate surface as defined under item [5.8], wherein the imaging device is selected from an image sensor and a photographic film.
[5.10] Method of determining the presence of labelled particles on a substrate surface as defined under any one of items [5.1] to [5.5], wherein the means for detecting a signal emitted by the labelled particles is the human eye.
[5.11] Method of determining the presence of labelled particles on a substrate surface as defined under any one of items [5.1] to [5.9], wherein
   - in step (b) the intensity of the signal emitted by the labelled particles across the substrate surface is recorded as I₀,
   - the method comprises after step (b) the steps of

   (c) subjecting the substrate surface to a treatment removing at least a portion of the labelled particles from the substrate surface,
   (d) repeating step (b) and recording the intensity of the signal emitted by the labelled particles across the substrate surface as I₁,
   (e) calculating the ratio I₁ / I₀.
[5.12] Method of determining the presence of labelled particles on a substrate surface as defined under item [5.10], wherein the treatment in step (c) is a cleaning treatment.
[5.13] Method of determining the presence of labelled particles on a substrate surface as defined under item [5.10] or [5.12], wherein the method is a method of monitoring efficiency of a cleaning treatment of said substrate surface.
[5.14] Method of determining the presence of labelled particles on a substrate surface as defined under any one of items [5.10] to [5.13], wherein steps (c) to (e) are repeated until the value of the ratio I₁ / I₀ is 0.05 or less.
[5.15] Method of determining the presence of labelled particles on a substrate surface as defined under any one of items [5.10] to [5.13], wherein steps (c) to (e) are repeated until the value of the ratio I₁ / I₀ is 0.02 or less.
[5.16] Method of determining the presence of labelled particles on a substrate surface as defined under any one of items [5.10] to [5.13], wherein steps (c) to (e) are repeated until the value of the ratio I₁ / I₀ is 0.01 or less.
[5.17] Method of determining the presence of labelled particles on a substrate surface as defined under any one of items [5.1] to [5.9], wherein
   - in step (b) the number of the labelled particles on the substrate surface is recorded as n₀,
   - the method comprises after step (b) the steps of

   (c) subjecting the substrate surface to a treatment removing at least a portion of the labelled particles from the substrate surface,
   (d) repeating step (b) and recording the number of the labelled particles on the substrate surface as n₁,
   (e) calculating the ratio n₁ / n₀.
[5.18] Method of determining the presence of labelled particles on a substrate surface as defined under item [5.17], wherein the treatment in step (c) is a cleaning treatment.
[5.19] Method of determining the presence of labelled particles on a substrate surface as defined under item [5.17] or [5.18], wherein the method is a method of monitoring efficiency of a cleaning treatment of said substrate surface.
[5.20] Method of determining the presence of labelled particles on a substrate surface as defined under item [5.17] to [5.19], wherein steps (c) to (e) are repeated until the value of the ratio n₁ / n₀ is 0.05 or less.
[5.21] Method of determining the presence of labelled particles on a substrate surface as defined under item [5.17][5.10], wherein steps (c) to (e) are repeated until the value of the ratio n₁ / n₀ is 0.02 or less.
[5.22] Method of determining the presence of labelled particles on a substrate surface as defined under item [5.17], wherein steps (c) to (e) are repeated until the value of the ratio n₁ / n₀ is 0.01 or less.
[5.23] Method of determining the presence of labelled particles on a substrate surface as defined under any one of items [5.1] to [5.10], wherein
   - the method comprises before step (a) the step of
      (α) applying a plurality of labelled particles to a surface of an object, and
   - in step (a) applying a plurality of labelled particles to a substrate surface is carried out by contacting said surface of said object with said substrate surface.
[5.24] Method of determining the presence of labelled particles on a substrate surface as defined under item [5.23], wherein the method is a method of monitoring cross-contamination.
[5.25] Method of determining the presence of labelled particles on a substrate surface as defined under any one of items [5.1] to [5.10], wherein
   the method comprises after step (b) the steps of
   (c) subjecting the substrate surface to a treatment removing at least a portion of the labelled particles from the substrate surface,
   (d) repeating step (b) in order to identify areas of the substrate surface, where a signal with high intensity and/or a large number of labelled particles is detected.
[5.26] Method of determining the presence of labelled particles on a substrate surface as defined under item [5.25], wherein the method is a method of detecting an irregularity of said substrate surface.
[5.27] Method of determining the presence of labelled particles on a substrate surface as defined under item [5.26], wherein the irregularity of said substrate surface is selected from the group consisting of a recess, a scratch, a crack, a crevice, and an impurity.
[5.28] Method of determining the presence of labelled particles on a substrate surface as defined under any one of items [5.25] to [5.27], wherein
   the plurality of labelled particles comprises
   - a first population of labelled particles as defined under any one of items [1.1] to [1.41], wherein the tracer compound comprised in the labelled particles of this first population is a first tracer compound and wherein the first population of labelled particles has a first mean particle size D¹₅₀,
      and
   - a second population of labelled particles as defined under any one of items [1.1] to [1.41], wherein the tracer compound comprised in the labelled particles of this second population is a second tracer compound and wherein the second population of labelled particles has a second mean particle size D²₅₀,
   wherein the first tracer compound is different from the second tracer compound and wherein the ratio D²₅₀ / D¹₅₀ is 1.2 or more.
[5.29] Method of determining the presence of labelled particles on a substrate surface as defined under item [5.28], wherein the ratio D²₅₀ / D¹₅₀ is 1.5 or more.
[5.30] Method of determining the presence of labelled particles on a substrate surface as defined under item [5.28], wherein the ratio D²₅₀ / D¹₅₀ is 2 or more.
[5.31] Method of determining the presence of labelled particles on a substrate surface as defined under any one of items [5.25] to [5.27], wherein the plurality of labelled particles comprises at least one further population of labelled particles as defined under any one of items [1.1] to [1.41], wherein
   - the at least one further population of labeled particles has a mean particle size Dⁿ₅₀,
   - the tracer compound comprised in the labelled particles of this at least one further population is a further tracer compound,

   wherein the first tracer compound, the second tracer compound and each of the further tracer compounds are different from each other and
   wherein the ratio Dⁿ₅₀ / D⁽ⁿ⁻¹⁾₅₀ is 1.2 or more, wherein D⁽ⁿ⁻¹⁾₅₀ is the mean particle size of the (n-1)^{th} population.
[5.32] Method of determining the presence of labelled particles on a substrate surface as defined under item [5.31], wherein the ratio Dⁿ₅₀ / D⁽ⁿ⁻¹⁾₅₀ is 1.5 or more.
[5.33] Method of determining the presence of labelled particles on a substrate surface as defined under item [5.31], wherein the ratio Dⁿ₅₀ / D⁽ⁿ⁻¹⁾₅₀ is 2 or more.
[5.34] Method of determining the presence of labelled particles in a fluid, wherein said fluid is selected from the group consisting of a gas, a liquid, and a supercritical fluid, and wherein each of the labelled particles is as defined under any one of items [1.1] to [1.41], comprising the steps of:
   (a) introducing a plurality of labelled particles into a volume of said fluid, and
   (b) observing said fluid using a means for detecting a signal emitted by the labelled particles.
[5.35] Method of determining the presence of labelled particles in a fluid as defined under item [5.34], wherein said fluid is a gas selected from the group consisting of nitrogen, oxygen, hydrogen, carbon dioxide, carbon monoxide, helium, neon, argon, krypton, xenon, ethene, ethyne, dinitrogen monoxide, dinitrogen monoxide, air, and mixtures of these.
[5.36] Method of determining the presence of labelled particles in a fluid as defined under item [5.34], wherein said fluid is a liquid selected from the group consisting of water, a vegetable oil, a mineral oil, a cooling liquid, a heat exchanger liquid, diesel oil, a chemical.
[5.37] Method of determining the presence of labelled particles in a fluid as defined under item [5.34], wherein said fluid is a liquid having a viscosity at 20 °C of 10⁸ mPa·s or more.
[5.38] Method of determining the presence of labelled particles in a fluid as defined under item [5.34], wherein said fluid is a liquid having a viscosity at 20 °C of 10¹⁰ mPa·s or more.
[5.39] Method of determining the presence of labelled particles in a fluid as defined under item [5.34], wherein said fluid is a liquid having a viscosity at 20 °C of 10¹² mPa·s or more.
[5.40] Method of determining the presence of labelled particles in a fluid as defined under item [5.34], wherein said fluid is a liquid having a viscosity at 20 °C of 10¹⁴ mPa·s or more.
[5.41] Method of determining the presence of labelled particles in a fluid as defined under item [5.34], wherein said fluid is a liquid having a viscosity at 20 °C of 10¹⁶ mPa·s or more.

### First aspect: Labelled particle comprising a polymer and a tracer compound

According the first aspect of the invention, a labelled particle comprising a component selected from the group consisting of carbohydrates, cellulosics, proteins, fatty acids, trigylcerides of fatty acids and polymers and a tracer compound is provided. The term "fatty acid" in particular relates to fatty acids having 12 to 26 carbon atoms.

It was surprising found that a labelled particle according to this aspect of the invention is suitable as a test dust and can be produced, stored, handled in a convenient, reliable and reproducible manner. Furthermore, a labelled particle according to this aspect of the invention can be detected in a convenient, reliable and reproducible manner.

Without wishing to be bound to any theory, it is believed that the particle can be regarded as being "labelled" due to the presence of the tracer compound, because it can thus be detected in a convenient, reliable and reproducible manner. Furthermore, it is believed that the labelled particle can be produced, stored, handled in a convenient, reliable and reproducible manner due to the presence of the polymer, which allows that techniques commonly used in the handling of polymer powders can also be used in the case of the labelled particle according to the first aspect of the invention.

Preferred embodiments of the composition according to this aspect of the invention will become apparent from the following description.

In preferred embodiments, the tracer compound is activated, i.e. it can be detected without further treatment or activation. In simple terms, an activated tracer compound is already "switched on". A compound emitting α-radiation or β-radiation due to its radioactive nature can be mentioned as representing an exemplary activated tracer compound. Such a compound can be detected in a convenient manner by detecting the emitted α-radiation or β-radiation, respectively.

The tracer compound can also be selected from a photoluminescent, chemiluminescent, bioluminescent or photobleaching compound. A photoluminescent compound such as a fluorescent compound or a phosphorescent compound can be detected when it is irradiated with light of a suitable wavelength such as light from the visible spectrum or UV-light. In simple terms, the trace compound is "switched on" by such irradiation and can then be detected in a convenient manner by detecting the fluorescent radiation or phosphorescent radiation, respectively. The fluorescent or phosphorescent compound can be suitably selected, for instance by selecting the colour of the fluorescent radiation emitted or phosphorescent radiation emitted, respectively. Thus, in preferred embodiments the tracer compound emits radiation in the violet (380-450 nm), blue (451-500 nm), green (501-560 nm), yellow (561-580 nm), orange (581-600 nm) or red (601-780 nm) part of the spectrum. Such compounds are commonly known to the skilled person. For instance, based on molecular complexity and synthetic methods for obtaining such molecules, fluorescent molecules (also referred to as fluorophores) could be generally classified into the categories proteins and peptides, small organic compounds, synthetic oligomers polymers, and multi-component systems. Non-protein organic fluorophores commonly belong to following major families of chemical compounds:
- Xanthene derivatives: fluorescein, rhodamine, Oregon green, eosin, and Texas red
- Cyanine derivatives: cyanine, indocarbocyanine, oxacarbocyanine, thiacarbocyanine, and merocyanine
- Squaraine derivatives and ring-substituted squaraines, including Seta and Square dyes
- Squaraine rotaxane derivatives: See Tau dyes
- Naphthalene derivatives (dansyl and prodan derivatives)
- Coumarin derivatives
- Oxadiazole derivatives: pyridyloxazole, nitrobenzoxadiazole and benzoxadiazole
- Anthracene derivatives: anthraquinones, including DRAQ5, DRAQ7 and CyTRAK Orange
- Pyrene derivatives: cascade blue, etc.
- Oxazine derivatives: Nile red, Nile blue, cresyl violet, oxazine 170, etc.
- Acridine derivatives: proflavin, acridine orange, acridine yellow, etc.
- Arylmethine derivatives: auramine, crystal violet, malachite green
- Tetrapyrrole derivatives: porphin, phthalocyanine, bilirubin
- Dipyrromethene derivatives: BODIPY, aza-BODIPY
Other classifications relating to dyes include the following: Acridine dyes, Cyanine dyes, Fluorone dyes, Luciferins, Oxazine dyes, Phenanthridine dyes, Rhodamine dyes.

For instance, the tracer compound can be a fluorescent compound selected from the group consisting of fluorescein, rhodamine, oregon green, eosin, texas red, cascade blue, pacific blue, nile red, nile blue, cresyl violet, oxazine 170, proflavine, acridine orange, acridine yellow, auramine, crystal violet, malachite green, porphine, phthalocyanine, bilirubine and lucifer yellow.

In preferred embodiments, the component is selected from the group consisting of fatty acids, trigylcerides of fatty acids and polymers, wherein the fatty acids are selected from the group consisting of fatty acids having 12 to 26 carbon atoms. In more preferred embodiments, the component is selected from the group consisting of polymers. In the case of these embodiments, the polymer present in the labelled particle of the present invention can be selected by the skilled person on basis of common knowledge in the technical field. During the research investigations which resulted in the present invention, the polymers comprising repeating units of a type selected from the group consisting of 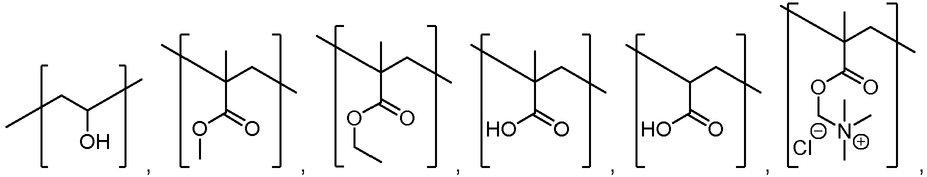 and 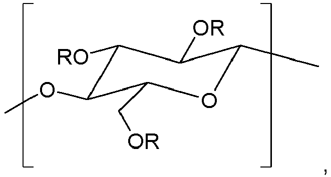 wherein each R is independently H or C₁-C₆ alkyl were found as being suitable in various tests. Preferably, R is independently H, methyl or ethyl. More preferably, R is ethyl.

The polymer can be copolymer or a homopolymer. When the polymer is a copolymer, the polymer comprises two or more types of repeating units and these two or more types of repeating units can be selected from aforementioned group. The polymer can also consist of two or more types of repeating units selected from aforementioned group. When the polymer is a homopolymer, the polymer consists of one type of repeating units and this one type of repeating units can be selected from aforementioned group.

Small particles comprising a polymeric material have recently become an issue of environmental concern. Therefore, it is preferred that the polymer present in the labelled particle of the present invention is biodegradable. For this purpose, it is preferred that the polymer comprises repeating units of the type 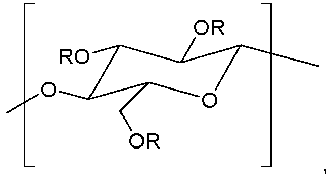 wherein each R is independently H or C₁-C₆ alkyl. As mentioned, among these embodiments, it is more preferred that R is independently H, methyl or ethyl and it is even more preferred that R is ethyl. Most preferably, the polymer consists of repeating units of this type, wherein each R is independently H or C₁-C₆ alkyl, preferably H, methyl or ethyl, and more preferably ethyl.

The polymer can preferably be present in the labelled particle as an exterior layer, i.e. a surface layer. In preferred embodiments, the tracer compound is encapsulated by the polymer.

In order to be suitable as a test dust, the labelled particle should have a relatively small size. Preferably, the labelled particle has a size of about 100 µm or less, more preferably about 80 µm or less, even more preferably about 60 µm or less, still more preferably about 50 µm or less, most preferably about 40 µm or less. Likewise, the labelled particle should not have a size too small because a too small size may result in excessive dusting, which affects convenient handling. Thus, preferably, the labelled particle has a size of about 1 nm or more, more preferably about 10 nm or more, even more preferably about 50 nm or more, still more preferably about 100 nm or more, yet more preferably about 500 nm or more and most preferably about 1 µm or more.

As exemplary ranges of values that represent preferred sizes of the labelled particle, a range of about 1 nm to 100 µm can be mentioned, preferably about 10 nm to 80 µm, more preferably about 50 nm to 60 µm, even more preferably about 100 nm to 50 µm, still more preferably about 500 nm to 40 µm and most preferably about 1 µm to 40 µm.

A labelled particle according to the present invention can be conveniently handled as it forms a free-flowing powder, i.e. it can be conveniently poured. The free-flowing property can be measured by determining the angle of repose, for instance according to the method described in ASTM C1444.

A labelled particle according to the present invention can be conveniently handled as it is (in a plurality of labelled particles) a free-flowing powder, which can be conveniently poured. The free-flowing property can be measured by determining the angle of repose (according to the method described in the Examples section). For a plurality of the labelled particle according to the present invention, the angle of repose typically is 35° or less, preferably 30° or less, more preferably 25° or less, even more preferably 22° or less, still more preferably 20° or less.

Likewise, the labelled particles according to the present invention can be conveniently stored, i.e. without formation of agglomerates.

Within the framework of the present application, the particle size is determined according to the method described in the Examples section.

### Second aspect: Composition comprising a plurality of said labelled particle according to the first aspect of the invention

According to the second aspect of the invention, a composition is provided comprising a plurality of the labelled particle according to the first aspect of the invention as described hereinabove.

As mentioned, the labelled particle according to the first aspect of the present invention can be conveniently handled as it forms a free-flowing powder, i.e. it can be conveniently poured. It can also be conveniently stored as it has a low tendency of forming agglomerates.

In some embodiments, the composition contains the plurality of labelled particles in an amount of 30 wt.-% or more, preferably 40 wt.-% or more, 50 wt.-% or more, 60 wt.-% or more, 70 wt.-% or more, more preferably 80 wt.-% or more, 90 wt.-% or more, even more preferably 95 wt.-% or more, still more preferably 96 wt.-%, yet more preferably 97 wt.-% or more, most preferably 98 wt.-% or more, relative to the total weight of the composition.

In some embodiments, the composition contains the plurality of labelled particles in an amount of 98 wt.-% or less, preferably 97 wt.-% or less, 96 wt.-% or less, 95 wt.-% or less, 90 wt.-% or less, 80 wt.-% or less, 70 wt.-% or less, 60 wt.-% or less, or 50 wt.-%.

In order to further adjust the free-flowing property and/or the low tendency of forming agglomerates, a flow regulating agent can be present. That is, the composition according to the second aspect of the present invention can comprise, as a further constituent, a flow regulating agent. The flow regulating agent can be selected from particles different from photoluminescent compounds, chemiluminescent compounds, bioluminescent compounds, photobleaching compounds, fluorescent compounds, phosphorescent compounds, compounds emitting α-radiation, compounds emitting β-radiation. As exemplary flow regulating agents, silica, silica gel, fumed silica, talc, and magnesium carbonate can be mentioned, of which silica, silica gel and fumed silica are preferred. In preferred embodiments, the flow regulating agent has a particle size of 500 nm or less, preferably 300 nm or less, more preferably 200 nm or less, most preferably 100 nm or less.

The flow regulating agent can be present in amounts as required in order to achieve the desired effect. However, in general, it is preferable that the flow regulating agent is present in the composition in an amount of at least about 1 wt.-%, more preferably at least about 2 wt.-%, even more preferably at least about 3 wt.-%, still more preferably at least about 4 wt.-%, most preferably at least about 5 wt.-%, relative to the total weight of the composition. Likewise, it is generally preferable hat the flow regulating agent is present in the composition in an amount of about 20 wt.-% or less, more preferably about 17 wt.-% or less, even more preferably about 15 wt.-% or less, still more preferably about 13 wt.-% or less, yet more preferably about 12 wt.-% or less and most preferably about 10 wt.-% or less, relative to the total weight of the composition.

Thus, as exemplary ranges of values that represent preferred amounts of the flow regulating agent, a range of about 1 wt.-%. to 20 wt.-% relative to the total weight of the composition can be mentioned, preferably about 2 wt.-%. to 17 wt.-%, more preferably about 3 wt.-%. to 15 wt.-%, even more preferably about 3 wt.-%. to 12 wt.-%, still more preferably about 4 wt.-%. to 11 wt.-% and most preferably about 5 wt.-%. to 10 wt.-% relative to the total weight of the composition.

Typically, the composition does not contain solvent as a result of a drying step in the manufacturing process. However, the presence of a low amount of solvent is usually not detrimental. For instance, the composition can comprise about 4 wt.-% or less, such as about 2 wt.-% or less of a solvent relative to the total weight of the composition.

In some embodiments, the composition can contain an adhesive agent. In such a case, the composition is particularly suitable for being used as an adhesive that can be conveniently detected due to the convenient detectability of the labelled particles contained in the composition.

In some preferred embodiments of the composition, the plurality of labelled particles has a mean particle size D₅₀ of about 100 µm or less, such as a mean particle size D₅₀ of about 80 µm or less, preferably about 60 µm or less, more preferably about 50 µm or less, most preferably about 40 µm or less. Likewise, the plurality of labelled particles typically has a mean particle size D₅₀ of about 1 nm or more, preferably about 10 nm or more, more preferably about 50 nm or more, even more preferably about 100 nm or more, still more preferably about 500 nm or more, most preferably about 1 µm or more.

As exemplary ranges of values that represent a preferred mean particle size D₅₀ of the plurality of labelled particles, a range of about 1 nm to 100 µm can be mentioned, preferably about 10 nm to 80 µm, more preferably about 50 nm to 60 µm, even more preferably about 100 nm to 50 µm, still more preferably about 500 nm to 40 µm and most preferably about 1 µm to 40 µm.

It can be advantageous to provide a composition which contains more than one population of labelled particles. One population can usually be characterized by a specific particle size distribution, which can be described by means of the mean particle size D₅₀ and the percentiles D₁₀ and D₉₀. When the particle size distribution of a mixture of two or more populations of labelled particles is determined, two or more particle size values having the highest occurrence can be observed. Such mixtures of two or more populations of labelled particles can therefore also be referred to as "bimodal", "trimodal" etc. or, in general terms, as "multimodal". Similarly, different populations of labelled particles can be characterized in that they differ as regards the tracer compound present in the labelled particles.

In preferred embodiments, the composition can thus comprise a plurality of labelled particles, which comprises a first population of labelled particles, wherein the tracer compound comprised in the labelled particles of this first population is a first tracer compound, and a second population of labelled particles, wherein the tracer compound comprised in the labelled particles of this second population is a second tracer compound, wherein the first tracer compound is different from the second tracer compound. In such a composition, the first population of labelled particles can have a first mean particle size D¹₅₀ and the second population of labelled particles has a second mean particle size D²₅₀, and the mean particle size encountered in these populations can be similar or different. For instance, the ratio D²₅₀ / D¹₅₀ can be in the range of 0.9 to 1.1, i.e. the first mean particle size D¹₅₀ and the second mean particle size D²₅₀ are similar or even identical. Likewise, the ratio D²₅₀ / D¹₅₀ can be in the range of 1.2 or more, 1.5 or more, or even 2 or more.

In some embodiments, the plurality of labelled particles comprises a first and a second population of labelled particles and, in addition, at least one further population of labelled particles, wherein the tracer compound comprised in the labelled particles of this at least one further population is a further tracer compound, wherein the first tracer compound, the second tracer compound and each of the further tracer compounds are different from each other. In some of these embodiments, the plurality of labelled particles can thus comprise a first population of labelled particles having a first mean particle size D¹₅₀, second population of labelled particles having a second mean particle size D²₅₀, and at least one further population of labeled particles has a mean particle size Dⁿ₅₀, wherein the ratio Dⁿ₅₀ / D⁽ⁿ⁻¹⁾₅₀ is 1.2 or more, wherein D⁽ⁿ⁻¹⁾₅₀ is the mean particle size of the (n-1)^{th} population. In preferred embodiments, the ratio Dⁿ₅₀ / D⁽ⁿ⁻¹⁾₅₀ is 1.5 or more or even 2 or more.

The particle size distribution within the plurality of labelled particles can be relatively small. Thus, the ratio of the particle size D₉₀ and the particle size D₁₀ D₉₀ / D₁₀ is preferably 10 or less, more preferably 7 or less, even more preferably 5 or less, still more preferably 3 or less, most preferably 2 or less. This applies in an analogous manner to compositions comprising two populations of labelled particles. More specifically, in the first population of labelled particles and in the second population of labelled particles the ratio D₉₀ / D₁₀ can be 10 or less. It is preferred that the ratio D₉₀ / D₁₀ is 7 or less, 5 or less or 3 or less. Most preferably, the ratio D₉₀ / D₁₀ is 2 or less.

In some of these embodiments, the ratio of the particle size D₉₀ and the particle size D₁₀ D₉₀ / D₁₀ preferably is 10 or less in each of the populations of labelled particles. More preferably, the ratio D_{90 /} D₁₀ is 7 or less, even more preferably 5 or less, still more preferably 3 or less, most preferably 2 or less.

A composition according to the present invention can be conveniently handled as it forms a free-flowing powder, i.e. it can be conveniently poured. The free-flowing property can be measured by determining the angle of repose (according to the method described in the Examples section). For the composition according to the present invention, the angle of repose typically is 35° or less, preferably 30° or less, more preferably 25° or less, even more preferably 22° or less, still more preferably 20° or less.

Likewise, the composition can be conveniently stored, i.e. without formation of agglomerates, which would affect the mean particle size D₅₀. Thus, the ratio of the mean particle size D₅₀ measured after the composition was prepared and the mean particle size D₅₀ measured after a storage for 6 months at 20 °C and 40 % relative humidity preferably typically is in the range of about 0.9 to 1.1.

Within the framework of the present application, the particle size is determined according to the method described in the Examples section.

### Third aspect: Method of preparing said labelled particle according to the first aspect of the invention

According to the third aspect of the invention, there is provided a method of preparing a labelled particle, wherein the labelled particle is as described hereinabove with respect to the first aspect of the present invention, comprising the following steps:
(a) providing a solution of a component and a tracer compound in a non-polar solvent,
(b) adding the solution obtained in step (a) to water under mixing action to form a dispersion,
(c) removing the non-polar solvent,
(d) separating the labelled particles thus formed,
(e) drying the labelled particles obtained in step (d),
wherein said component is selected from the group consisting of carbohydrates, cellulosics, proteins, fatty acids, trigylcerides of fatty acids and polymers.

In preferred embodiments, the component is selected from the group consisting of fatty acids and fatty acid trigylcerides of fatty acids, wherein the fatty acids are selected from fatty acids having 12 to 26 carbon atoms. In other preferred embodiments, the component is selected from the group consisting of polymers.

The non-polar solvent is not particularly limited and can for instance be selected from the group consisting of alkanes, cycloalkanes, halogenated alkanes, halogenated cycloalkanes, dialkylethers, alkanoic acid alkyl esters, and combinations of these. Among these, the following solvents can be mentioned as being preferable: dichloromethane, trichloromethane, tetrachlormethane, diethylether, dipropylether, acetic acid methyl ester, acetic acid ethyl ester, and combinations of these. As the non-polar solvent is removed in step (c), it is advantageous that the non-polar solvent has boiling point of less than 50 °C. From this point of view, dichloromethane can be mentioned as an advantageous and preferable non-polar solvent.

As indicated, in step (b) the solution of polymer and tracer compound in said non-polar solvent is added to water under mixing action. The size of the droplets of the solution in the non-polar solvent formed in the aqueous phase are important as regards the size of the labelled particles obtained. Thus, as a general rule, it can be said that the smaller the droplets of the non-polar solution, the smaller the labelled particles obtained from the process. At the same time, the skilled person understands that the smaller the droplets, the less prone they are to phase separation, i.e. separation of the aqueous phase and the phase of the non-polar solvent. In order to reduce the size of the droplets of the non-polar solvent in the aqueous phase, vigorous mixing is preferred. It is more preferred to mix the phases by shearing, for instance by using a mixing device equipped with a rotor-stator combination. Devices suitable for this purpose are commercially available under the trade name Ultra-Turrax^{®} from IKA^{®}-Werke GmbH & CO. KG, Staufen, Germany, for instance.

The water to which the non-polar solvent is added in step (b) can optionally comprise a dispersant which can be beneficial in order to achieve efficient dispersing of the non-polar solvent. As an exemplary dispersant, polyvinylalcohol can be mentioned.

In step (c) the non-polar solvent can be removed by any means suitable. However, it is usually convenient and thus preferred to remove the non-polar solvent by evaporating, for instance by gentle heating. Evaporation can be carried out at atmospheric pressure or under reduced pressure. In the course of evaporation, the pressure could be reduced in order to facilitate essentially complete evaporation within a reasonable time span. As an alternative, the non-polar solvent could be removed by extraction, for instance. This is particularly advantageous in a case where the boiling point of the non-polar solvent is relatively high such as higher than 50 C, 70 °C or 90 °C. It can also be contemplated remove a part of the non-polar solvent by extraction and a part of the solvent by evaporation (also under reduced pressure).

In step (d), the labelled particles are separated from the aqueous phase. While the means for separating the labelled particles from the aqueous phase are not particularly limited, it is preferred to separate the labelled particles by centrifugation.

In step (e), the labelled particles separated from the aqueous phase are dried. Again, the means for drying the labelled particles are not particularly limited and, for instance, the labelled particles could be dried simply by exposing them to reduced pressure. Similarly, spray-drying represents a means for drying the labelled particles. It is preferred, however, to achieve drying of the labelled particles by freeze-drying, which was unexpectedly found to give labelled particles having good flowing properties. As a means to impart advantageous flowing properties, it also possible to add a flow regulating agent before or after step (e). As explained with respect to the second aspect of the present invention, the flow regulating agent can be selected from the group consisting of silica, silica gel, fumed silica, talc, and magnesium carbonate. In a preferred embodiment, it is thus possible to effect drying in step (e) by freeze-drying and, additionally, to add a flow regulating agent after step (e) has been completed.

### Fourth aspect: Method of preparing said composition according to the second aspect of the invention

According to the fourth aspect of the invention, there is provided a method of preparing a composition comprising a plurality of the labelled particle, wherein the composition is as described herein with respect to the second aspect of the invention. The method comprises the steps of
(a) providing a solution of a component and a tracer compound in a non-polar solvent,
(b) adding the solution obtained in step (a) to water under mixing action to form a dispersion,
(c) removing the non-polar solvent,
(d) separating the labelled particles thus formed,
(e) drying the labelled particles obtained in step (d),

wherein any component comprised in the composition in addition to said plurality of the labelled particle is added before or after step (e),
wherein said component is selected from the group consisting of carbohydrates, cellulosics, proteins, fatty acids, trigylcerides of fatty acids and polymers.

In preferred embodiments, the component is selected from the group consisting of fatty acids and fatty acid trigylcerides of fatty acids, wherein the fatty acids are selected from fatty acids having 12 to 26 carbon atoms. In other preferred embodiments, the component is selected from the group consisting of polymers.

That is, the method essentially comprises the same steps as the method for producing the labelled particles according to the third aspect of the invention. The essential difference is that any component that is present in composition (in addition to said plurality of the labelled particles) is added before or after step (e). Thus, it is for instance possible to add a flow regulating agent before or after step (e). As explained with respect to the second aspect of the present invention, the flow regulating agent can be selected from particles different from photoluminescent compounds, chemiluminescent compounds, bioluminescent compounds, photobleaching compounds, fluorescent compounds, phosphorescent compounds, compounds emitting α-radiation, compounds emitting β-radiation. For instance, the flow regulating agent can be selected from the group consisting of silica, silica gel, fumed silica, talc, and magnesium carbonate. In general, the flow regulating agent has the properties set out hereinabove with respect to the second aspect of the invention.

The non-polar solvent used in step (a) is not particularly limited and can for instance be selected from the group consisting of alkanes, cycloalkanes, halogenated alkanes, halogenated cycloalkanes, dialkylethers, alkanoic acid alkyl esters, and combinations of these. Among these, the following solvents can be mentioned as being preferable: dichloromethane, trichloromethane, tetrachlormethane, diethylether, dipropylether, acetic acid methyl ester, acetic acid ethyl ester, and combinations of these. As the non-polar solvent is removed in step (c), it is advantageous that the non-polar solvent has boiling point of less than 50 °C. From this point of view, dichloromethane can be mentioned as an advantageous and preferable non-polar solvent.

In step (b) the solution of polymer and tracer compound in said non-polar solvent is added to water under mixing action. The size of the droplets of the solution in the non-polar solvent formed in the aqueous phase are important as regards the size of the labelled particles obtained. Thus, as a general rule, it can be said that the smaller the droplets of the non-polar solution, the smaller the labelled particles obtained from the process. At the same time, the skilled person understands that the smaller the droplets, the less prone they are to phase separation, i.e. separation of the aqueous phase and the phase of the non-polar solvent. In order to reduce the size of the droplets of the non-polar solvent in the aqueous phase, vigorous mixing is preferred. It is more preferred to mix the phases by shearing, for instance by using a mixing device equipped with a rotor-stator combination. Devices suitable for this purpose are commercially available under the trade name Ultra-Turrax from IKA^{®}-Werke GmbH & CO. KG, Staufen, Germany, for instance.

The water to which the non-polar solvent is added in step (b) can optionally comprise a dispersant which can be beneficial in order to achieve efficient dispersing of the non-polar solvent. As an exemplary dispersant, polyvinylalcohol can be mentioned.

In step (c) the non-polar solvent can be removed by any means suitable. However, it is usually convenient and thus preferred to remove the non-polar solvent by evaporating, for instance by gentle heating. Evaporation can be carried out at atmospheric pressure or under reduced pressure. In the course of evaporation, the pressure could be reduced in order to facilitate essentially complete evaporation within a reasonable time span. As an alternative, the non-polar solvent could be removed by extraction, for instance. This is particularly advantageous in a case where the boiling point of the non-polar solvent is relatively high such as higher than 50 C, 70 °C or 90 °C. It can also be contemplated remove a part of the non-polar solvent by extraction and a part of the solvent by evaporation (also under reduced pressure).

In step (d), the labelled particles are separated from the aqueous phase. While the means for separating the labelled particles from the aqueous phase are not particularly limited, it is preferred to separate the labelled particles by centrifugation.

In step (e), the labelled particles separated from the aqueous phase are dried. Again, the means for drying the labelled particles are not particularly limited and, for instance, the labelled particles could be dried simply by exposing them to reduced pressure. Similarly, spray-drying represents a means for drying the labelled particles. It is preferred, however, to achieve drying of the labelled particles by freeze-drying, which was unexpectedly found to give labelled particles having good flowing properties.

### Fifth aspect: Method of determining the presence of said labelled particles according to the first aspect of the invention on a substrate surface or in a volume of a fluid selected from the group consisting of a gas, a liquid, and a supercritical fluid

According to the fifth aspect of the invention, there is provided a method determining the presence of labelled particles on a substrate surface, wherein each of the labelled particles is as defined under any one of items [1.1] to [1.41]. The method comprises the steps of:
(a) applying a plurality of labelled particles to a substrate surface, and
(b) observing the substrate surface using a means for detecting a signal emitted by the labelled particles.

The plurality of labelled particles used in step (a) can be a component of a composition according to the second aspect of the present invention.

It will become apparent from the following description that this method can be useful for monitoring efficiency of a cleaning treatment of said substrate surface, for monitoring cross-contamination, for detecting an irregularity of said substrate surface.

The substrate is not particularly limited and can for instance be any article of interest. The substrate can for instance be selected from the group consisting of the surface of a medical device, the surface of a semiconductor material, the surface of a device comprising a semiconductor material, the surface of an optical material, the surface of a device comprising an optical material, the surface of a manufacturing apparatus, the surface of a filter pad, the surface of a packaging material, the surface of a pharmaceutical formulation, and the surface of package containing a pharmaceutical formulation.

In view of the various tracer compounds that can be contained in the labelled particle according to the present invention, the method of determining the presence of labelled particles on a substrate surface according to the fifth aspect of the present invention, in preferred embodiments, is characterized in that the labelled particles comprise as the tracer compound a fluorescent compound as defined under any one of items [1.6] to [1.8], the method comprises in said step (b) irradiating the substrate surface with radiation inducing the fluorescent compound to emit fluorescent radiation, and the means for detecting a signal emitted by the labelled particles is a device detecting for said fluorescent radiation.

In alternative preferred embodiments, the method is characterized in that the labelled particles comprise as the tracer compound a phosphorescent compound as defined under any one of items [1.6] and [1.9], the method comprises in said step (b) or before said step (b) irradiating the substrate surface with radiation inducing the phosphorescent compound to emit phosphorescent radiation, and the means for detecting a signal emitted by the labelled particles is a device for detecting said phosphorescent radiation.

In other alternative preferred embodiments, the method is characterized in that the labelled particles comprise as the tracer compound a compound emitting α-radiation and the means for detecting a signal emitted by the labelled particles is a device for detecting α-radiation.

Similarly, in further alternative preferred embodiments, the method is characterized in that the labelled particles comprise as the tracer compound a compound emitting β-radiation and the means for detecting a signal emitted by the labelled particles is a device for detecting β-radiation.

In some embodiments, it can be advantageous that the means for detecting a signal emitted by the labelled particles comprises an imaging device. That is, an image of the substrate surface is taken in order to detect the labelled particles on the substrate surface, for instance by visual inspection using the human eye or, alternatively, by using computer-assisted image recognition and analysis. As the labelled particles according to the present invention would usually appear as shining dots on the substrate surface (due to the tracer compound contained in the labelled particles), computer-assisted image recognition and analysis can identify and quantify, i.e. "count", the shining dots or shining areas on basis of algorithms suitably adapted for this specific purpose. However, it is also possible to use a photographic film as the imaging device. This can be advantageous when it is intended to have a durable image of the substrate surface, for instance in applications in which durable documentation is important. In alternative embodiments, the means for detecting a signal emitted by the labelled particles can be the human eye.

Preferably, in step (b) of the method the intensity of the signal emitted by the labelled particles across the substrate surface is recorded as I₀, and the method comprises after step (b) the steps of
(c) subjecting the substrate surface to a treatment removing at least a portion of the labelled particles from the substrate surface,
(d) repeating step (b) and recording the intensity of the signal emitted by the labelled particles across the substrate surface as I₁,
(e) calculating the ratio I₁ / I₀.

According to these embodiments of the method, it can be tested to which extent the treatment carried out in step (c) is efficient as a cleaning treatment of the substrate surface and how many cleaning cycles are required in order to achieve and ensure a specific cleaning effect. For instance, steps (c) to (e) can be repeated until the value of the ratio I₁ / I₀ is 0.05 or less, preferably 0.02 or less, more preferably 0.01 or less.

In similarly preferred embodiments, the number of labelled particles is recorded (as the labelled particles can be conveniently detected due to the signal they emit) instead of the intensity of the signal emitted. Thus, in step (b) the number of the labelled particles on the substrate surface is recorded as n₀, the method comprises after step (b) the steps of
(c) subjecting the substrate surface to a treatment removing at least a portion of the labelled particles from the substrate surface,
(d) repeating step (b) and recording the number of the labelled particles on the substrate surface as n₁,
(e) calculating the ratio n₁ / n₀.

Again, it can be tested to which extent the treatment carried out in step (c) is efficient as a cleaning treatment of the substrate surface and how many cleaning cycles are required in order to achieve and ensure a specific cleaning effect. For instance, steps (c) to (e) are repeated until the value of the ratio n₁ / n₀ is 0.05 or less, preferably 0.02 or less, more preferably 0.01 or less.

In other preferred embodiments, the method comprises before step (a) the step of applying a plurality of labelled particles to a surface of an object, and in step (a) applying a plurality of labelled particles to a substrate surface is carried out by contacting said surface of said object with said substrate surface. According to these embodiments of the method, it can be tested whether and to which extent cross-contamination occurs, i.e. contaminants are carried off from the surface of the object to the substrate surface .

In further preferred embodiments, the method comprises after step (b) the steps of
(c) subjecting the substrate surface to a treatment removing at least a portion of the labelled particles from the substrate surface,
(d) repeating step (b) in order to identify areas of the substrate surface, where a signal with high intensity and/or a large number of labelled particles is detected.

Thus, it can be detected whether there are areas on the substrate surface in which the labelled particles adhere more strongly (or, in some cases, less strongly) than in other areas. The substrate surface in which the labelled particles adhere more strongly than in other areas can for instance be a recess, a scratch, a crack, a crevice, or an impurity (i.e. an irregularity, in more general terms). These embodiments of the method according to the present invention can be employed in an advantageous manner when a substrate surface is required to have a uniform surface and it has to be tested whether the required uniformity has been achieved.

In more preferred embodiments, labelled particles having different mean particle sizes and containing different tracer compounds can be used in these method of detecting a recess, a scratch, a crack, or a crevice. This provides the advantage to detect a recess, a scratch, a crack, or a crevice and the size of the recess, scratch, crack, or crevice is indicated by the different tracer compounds.

Thus, in one of these preferred embodiments, the method of determining the presence of labelled particles on a substrate surface is characterized in that the plurality of labelled particles comprises
- a first population of labelled particles according to the first aspect of the present invention, wherein the tracer compound comprised in the labelled particles of this first population is a first tracer compound and wherein the first population of labelled particles has a first mean particle size D¹₅₀,
   and
- a second population of labelled particles according to the first aspect of the present invention, wherein the tracer compound comprised in the labelled particles of this second population is a second tracer compound and wherein the second population of labelled particles has a second mean particle size D²₅₀,
wherein the first tracer compound is different from the second tracer compound and wherein the ratio D²₅₀ / D¹₅₀ is 1.2 or more.

In more preferred embodiments, the ratio D²₅₀ / D¹₅₀ is 1.5 or more, even more preferably 2 or more.

In even more preferred embodiments, the method of determining the presence of labelled particles on a substrate surface is characterized in that the plurality of labelled particles comprises at least one further population of labelled particles according to the first aspect of the present invention, wherein
- the at least one further population of labeled particles has a mean particle size Dⁿ₅₀,
- the tracer compound comprised in the labelled particles of this at least one further population is a further tracer compound,

wherein the first tracer compound, the second tracer compound and each of the further tracer compounds are different from each other and
wherein the ratio Dⁿ₅₀ / D⁽ⁿ⁻¹⁾₅₀ is 1.2 or more, wherein D⁽ⁿ⁻¹⁾₅₀ is the mean particle size of the (n-1)^{th} population.

In still more preferred embodiments, the ratio Dⁿ₅₀ / D⁽ⁿ⁻¹⁾₅₀ is 1.5 or more, yet more preferably 2 or more, wherein D⁽ⁿ⁻¹⁾₅₀ is the mean particle size of the (n-1)^{th} population.

Furthermore, there is provided a method determining the presence of labelled particles in a fluid, wherein said fluid is selected from the group consisting of a gas, a liquid, and a supercritical fluid, and wherein each of the labelled particles is according to the first aspect of the present invention, comprising the steps of:
(a) introducing a plurality of labelled particles into a volume of said fluid, and
(b) observing said fluid using a means for detecting a signal emitted by the labelled particles, where said means is as described above.

In preferred embodiments, the fluid ca be a gas selected from the group consisting of nitrogen, oxygen, hydrogen, carbon dioxide, carbon monoxide, helium, neon, argon, krypton, xenon, ethene, ethyne, dinitrogen monoxide, dinitrogen monoxide, and mixtures of these, such as air. Said fluid can likewise be a liquid selected from the group consisting of water, a vegetable oil, a mineral oil, a cooling liquid, a heat exchanger liquid, diesel oil, a chemical.

In some embodiments, said fluid is a liquid having a viscosity at 20 °C of 10⁸ mPa·s or more, such as 10¹⁰ mPa·s or more, 10¹² mPa·s or more, 10¹⁴ mPa·s or more, 10¹⁶ mPa·s or more.

### Examples

In the following, the present invention is illustrated by means of the following examples and comparative examples.

### General observations

In the examples and comparative examples, the following analytical methods are used.

### (1) Particle size

Particle sizes of 100 nm and below are determined according to the following method using a Nanopartica SZ-100 (Horiba, Japan): A particle sample is diluted with distilled water and the particle size is assayed by dynamic light scattering (DLS) at 173° angle. The measurements were conducted at 25 °C.

Particle sizes of more than 100 nm are measured determined according to the following method using a Laser Diffraction Particle Size Analyser LA-960 (HORIBA, Japan): A particle sample is dispersed in an aqueous solution of 0.02% of polysorbate 20. For the measurement, the particles suspended in this medium are filled into a glass cuvette. The measurements were conducted at 25 °C.

### (2) Angle of repose

The angle of repose is measured using a 50 ml volumetric cylinder according to the method described in the European Pharmacopoeia (section 2.9.16).

### Example 1:

7.5 mg of Nile Red dye and 1.5 g of ethylcellulose (Ethocel^{®} Standard 10 Premium, commercially available from Colorcon GmbH, Idstein, Germany) were dissolved in 15 ml of dichloromethane.

In a 150 ml-size beaker, polyvinyl alcohol was dispersed in 45 ml of distilled water so as to give a concentration 2 wt.-%. An Ultra-Turrax^{®} (IKA^{®} Ultra-Turrax^{®} T18, commercially available from IKA^{®}-Werke GmbH & CO. KG, Staufen, Germany) was immersed into this dispersion and set to 22000 rpm (equivalent to position 5). Then the solution of ethylcellulose and Nile Red dye was added dropwise and dispersed for 1 minute. The dispersion thus obtained is then poured into 1 litre of an aqueous polyvinyl alcohol dispersion (concentration of polyvinylalcohol: 0.1 wt.-%) and stirred using a magentic stirrer at 300 rpm for 3 hours such that the dichloromethane is evaporated. The particles are separated by centrifugation at 4500 rpm for 8 minutes and freeze-dried.

Particles having a red colour having are thus obtained. The size of the particles is as follows.
D₅₀ = 6.2 µm
D₁₀ = 3.9 µm
D₉₀ = 10.1 µm

## Claims

**1.** Labelled particle comprising
(a) a component, and
(b) a tracer compound,
wherein the component is selected from the group consisting of carbohydrates, cellulosics, proteins, fatty acids, triglycerides of fatty acids and polymers;
wherein, preferably,
(i) the component is selected from the group consisting of fatty acids, triglycerides of fatty acids and polymers, wherein, more preferably, the fatty acids are selected from fatty acids having 12 to 26 carbon atoms, and wherein, most preferably, the component is selected from the group consisting of polymers,
and/or
(ii) the polymer is present as an exterior layer of the labelled particle;
and/or
(iii) the tracer compound is
- activated, preferably emitting α-radiation or β-radiation, or
- activatable, preferably a photoluminescent compound, more preferably fluorescent compound or phosphorescent compound, even more preferably a fluorescent or phosphorescent compound emitting light in the violet (380-450 nm), blue (451-500 nm), green (501-560 nm), yellow (561-580 nm), orange (581-600 nm) or red (601-780 nm) part of the spectrum, still more preferably a fluorescent compound selected from the group consisting of fluorescein, rhodamine, oregon green, eosin, texas red, cascade blue, pacific blue, nile red, nile blue, cresyl violet, oxazine 170, proflavine, acridine orange, acridine yellow, auramine, crystal violet, malachite green, porphine, phthalocyanine, bilirubine and lucifer yellow.

**2.** Labelled particle according to claim 1, wherein
(i) the polymer comprises repeating units of a type selected from the group consisting of 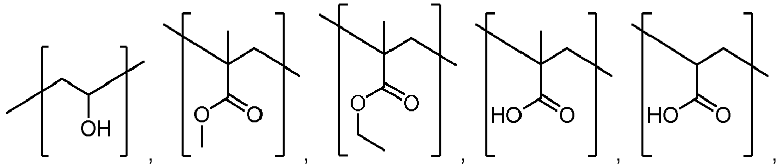 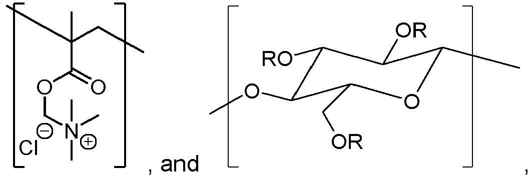 wherein each R is independently H or C1-C6 alkyl, preferably R is independently H, methyl or ethyl, more preferably R is ethyl;
or
(ii) the polymer consists of repeating units represented by the formula, 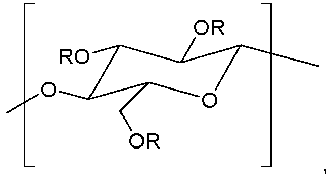 wherein each R is ethyl.

**3.** Labelled particle according to claim 1 or claim 2, wherein the labelled particle has a size in the range of about 1 nm to 100 µm, preferably in the range of about 10 nm to 80 µm, more preferably in the range of about 50 nm to 60 µm, even more preferably in the range of about 100 nm to 50 µm, still more preferably in the range of about 500 nm to 40 µm, most preferably in the range of about 1 µm to 40 µm.

**4.** Composition comprising a plurality of the labelled particle as defined in any one of claims 1-3, wherein the composition preferably comprises a flow regulating agent, which is preferably selected from the group consisting of silica, silica gel, fumed silica, talc, and magnesium carbonate, more preferably from the group consisting of silica, silica gel, and fumed silica.

**5.** Composition according to claim 4, wherein the flow regulating agent
- has a particle size of 500 nm or less, preferably 300 nm or less, more preferably 200 nm or less, most preferably 100 nm or less; and/or
- is present in the composition in an amount relative to the total weight of the composition in the range of about 1 wt.-%. to 20 wt.-%, preferably in the range of about 2 wt.-%. to 17 wt.-%, more preferably in the range of about 3 wt.-%. to 15 wt.-%, even more preferably in the range of about 3 wt.-%. to 12 wt.-%, most preferably in the range of about 5 wt.-%. to 10 wt.-%.

**6.** Composition according to claim 4 or claim 5, wherein the plurality of labelled particles has a mean particle size D₅₀ of in the range of about 1 nm to 100 µm, preferably in the range of about 10 nm to 80 µm, more preferably in the range of about 50 nm to 60 µm, even more preferably in the range of about 100 nm to 50 µm, still more preferably in the range of about 500 nm to 40 µm, most preferably in the range of about 1 µm to 40 µm.

**7.** Composition according to any one of claims 4 to 6, wherein the plurality of labelled particles comprises
- a first population of labelled particles as defined under any one of claims 1 to 5, wherein the tracer compound comprised in the labelled particles of this first population is a first tracer compound;
and
- a second population of labelled particles as defined under any one of claims 1 to 5, wherein the tracer compound comprised in the labelled particles of this second population is a second tracer compound,
wherein
(i) the first tracer compound is different from the second tracer compound
and/or, optionally, one of the following items (ii-a) and (ii-b):
(ii-a) the first population of labelled particles has a first mean particle size D¹₅₀, and the second population of labelled particles has a second mean particle size D²₅₀, wherein the ratio D²₅₀ / D¹₅₀ is in the range of 0.9 to 1.1, or
and/or
(ii-b) the first population of labelled particles has a first mean particle size D¹₅₀, and the second population of labelled particles has a second mean particle size D²₅₀, wherein the ratio D²₅₀ / D¹₅₀ is in the range of 1.2 or more, preferably 1.5 or more, more preferably 2 or more.

**8.** Composition according to any one of claims 4 to 7, wherein the ratio of the particle size D₉₀ and the particle size D₁₀ D₉₀ / D₁₀ is 10 or less, preferably 7 or less, more preferably 5 or less, even more preferably 3 or less, most preferably 2 or less.

**9.** Composition according to any one of claims 4 to 8, wherein the ratio of the mean particle size D₅₀ measured after the composition was prepared and the mean particle size D₅₀ measured after a storage for 6 months at 20 °C and 40 % relative humidity is in the range of about 0.9 to 1.1.

**10.** Method of preparing a labelled particle, wherein the labelled particle is as defined under any one of claims 1 to 3, comprising the following steps:
(a) providing a solution of a polymer and a tracer compound in a non-polar solvent,
(b) adding the solution obtained in step (a) to water under mixing action to form a dispersion,
(c) removing the non-polar solvent,
(d) separating the labelled particles thus formed,
(e) drying the labelled particles obtained in step (d).

**11.** Method of preparing a composition comprising a plurality of the labelled particle, wherein the composition is as defined under any one of claims 4 to 9, comprising the steps of:
(a) providing a solution of a polymer and a tracer compound in a non-polar solvent,
(b) adding the solution obtained in step (a) to water under mixing action to form a dispersion,
(c) removing the non-polar solvent,
(d) separating the labelled particles thus formed,
(e) drying the labelled particles obtained in step (d),
wherein any component comprised in the composition in addition to said plurality of the labelled particle is added before or after step (e).

**13.** Method according to claim 10 or claim 11, wherein
(i) the non-polar solvent is selected from the group consisting of alkanes, cycloalkanes, halogenated alkanes, halogenated cycloalkanes, dialkylethers, alkanoic acid alkyl esters, and combinations of these,
preferably from the group consisting of dichloromethane, trichloromethane, tetrachlormethane, diethylether, dipropylether, acetic acid methyl ester, acetic acid ethyl ester, and combinations of these;
and/or
(ii) in step (b) the water contains a dispersing agent, which dispersing agent preferably is polyvinylalcohol;
and/or
(iii) in step (c) the non-polar solvent is removing by evaporating at atmospheric pressure, evaporating at reduced pressure, extraction or a combination of these;
and/or
(iv) in step (d) the labelled particles are separated by means of centrifugation;
and/or
(v) in step (e) drying is effected by freeze-drying or spray-drying.

**14.** Method of determining the presence of labelled particles on a substrate surface, wherein each of the labelled particles is as defined in any one of claims 1 to 3, comprising the steps of:
(a) applying a plurality of labelled particles to a substrate surface, and
(b) observing the substrate surface using a means for detecting a signal emitted by the labelled particles;
wherein, preferably,
(i) in step (a) the plurality of labelled particles is applied as a component of a composition as defined in any one of claims 4 to 8;
and/or
(ii) said substrate surface is selected from the group consisting of the surface of a medical device, the surface of a semiconductor material, the surface of a device comprising a semiconductor material, the surface of an optical material, the surface of a device comprising an optical material, the surface of a manufacturing apparatus, the surface of a filter pad, the surface of packaging material, the surface of a pharmaceutical formulation, and the surface of package containing a pharmaceutical formulation.
and/or
(iii) the labelled particles comprise as the tracer compound a fluorescent compound, the method comprises in said step (b) irradiating the substrate surface with radiation inducing the fluorescent compound to emit fluorescent radiation, and
the means for detecting a signal emitted by the labelled particles is a device detecting for said fluorescent radiation.

**15.** Method of determining the presence of labelled particles on a substrate surface according to claim 14, wherein
- in step (b) the intensity of the signal emitted by the labelled particles across the substrate surface is recorded as I₀,
- the method comprises after step (b) the steps of
(c) subjecting the substrate surface to a treatment removing at least a portion of the labelled particles from the substrate surface,
(d) repeating step (b) and recording the intensity of the signal emitted by the labelled particles across the substrate surface as I₁,
(e) calculating the ratio I₁ / I₀;
wherein, preferably,
steps (c) to (e) are repeated until the value of the ratio I₁ / I₀ is 0.05 or less.

**16.** Method of determining the presence of labelled particles on a substrate surface according to claim 14, wherein
- in step (b) the number of the labelled particles on the substrate surface is recorded as n₀,
- - the method comprises after step (b) the steps of
(c) subjecting the substrate surface to a treatment removing at least a portion of the labelled particles from the substrate surface,
(d) repeating step (b) and recording the number of the labelled particles on the substrate surface as n₁,
(e) calculating the ratio n₁ / n₀;
wherein, preferably,
steps (c) to (e) are repeated until the value of the ratio n₁ / n₀ is 0.05 or less.

**17.** Method of determining the presence of labelled particles on a substrate surface according to claim 14, wherein
- the method comprises before step (a) the step of
(α) applying a plurality of labelled particles to a surface of an object, and
- in step (a) applying a plurality of labelled particles to a substrate surface is carried out by contacting said surface of said object with said substrate surface.

**18.** Method of determining the presence of labelled particles on a substrate surface according to claim 14, wherein
- the method comprises after step (b) the steps of
(c) subjecting the substrate surface to a treatment removing at least a portion of the labelled particles from the substrate surface,
(d) repeating step (b) in order to identify areas of the substrate surface, where a signal with high intensity and/or a large number of labelled particles is detected.

**19.** Method of determining the presence of labelled particles on a substrate surface according to claim 18, wherein the plurality of labelled particles comprises
- a first population of labelled particles as defined in any one of claims 1 to 3, wherein the tracer compound comprised in the labelled particles of this first population is a first tracer compound and wherein the first population of labelled particles has a first mean particle size D¹₅₀,
and
- a second population of labelled particles as defined in any one of claims 1 to 3, wherein the tracer compound comprised in the labelled particles of this second population is a second tracer compound and wherein the second population of labelled particles has a second mean particle size D²₅₀,
wherein the first tracer compound is different from the second tracer compound and wherein the ratio D²₅₀ / D¹₅₀ is 1.2 or more.

**20.** Method of determining the presence of labelled particles on a substrate surface according to claim 19, wherein the plurality of labelled particles comprises at least one further population of labelled particles as defined in any one of claims 1 to 3, wherein
- the at least one further population of labeled particles has a mean particle size Dⁿ₅₀, and
- the tracer compound comprised in the labelled particles of this at least one further population is a further tracer compound,
wherein the first tracer compound, the second tracer compound and each of the further tracer compounds are different from each other and
wherein the ratio Dⁿ₅₀ / D⁽ⁿ⁻¹⁾₅₀ is 1.2 or more, wherein D⁽ⁿ⁻¹⁾₅₀ is the mean particle size of the (n-1)^{th} population.

**21.** Method of determining the presence of labelled particles in a fluid, wherein said fluid is selected from the group consisting of a gas, a liquid, and a supercritical fluid, and wherein each of the labelled particles is as defined in any one of claims 1 to 3, comprising the steps of:
(a) introducing a plurality of labelled particles into a volume of said fluid, and
(b) observing said fluid using a means for detecting a signal emitted by the labelled particles;
wherein, preferably,
- said fluid is a gas selected from the group consisting of nitrogen, oxygen, hydrogen, carbon dioxide, carbon monoxide, helium, neon, argon, krypton, xenon, ethene, ethyne, dinitrogen monoxide, dinitrogen monoxide, and mixtures of these;
or
- said fluid is a liquid selected from the group consisting of water, a vegetable oil, a mineral oil, a cooling liquid, a heat exchanger liquid, diesel oil, a chemical.
